# EUROPÄISCHE PATENTSCHRIFT

(11) **EP 0 989 709 B1**
(45) Veröffentlichungstag und Bekanntmachung des Hinweises auf die Patenterteilung: **24.05.2006**
(21) Anmeldenummer: 99250334.2
(22) Anmeldetag: 22.09.1999
(51) Int. Cl.: H04L 29/06, H04Q 7/32

(54) **Verfahren zum Übertragen von Daten in einen Speicher eines insbesondere mit einem Kommunikationsnetz in Verbindung stehenden Gerätes**
Method to transmit Data into a memory of an apparatus in particular, which is connected to a network
Procédé de transmission de données dans une mémoire d'un appareil, tout particulièrement connecté à un réseau informatique

(30) Priorität: 25.09.1998 DE 19845823
(43) Veröffentlichungstag der Anmeldung: 29.03.2000
(73) Patentinhaber: SIEMENS AKTIENGESELLSCHAFT, 80333 München (DE)
(72) Erfinder: Antonov, Iavor, Dr., 10117 Berlin (DE); Trebisz, Andrezej, 10318 Berlin (DE)

(56) Entgegenhaltungen:
- EP-A- 0 804 046
- DE-A- 19 543 843
- GB-A- 2 295 908

## Beschreibung

Die Erfindung bezieht sich auf ein Verfahren zum Übertragen von Daten in einen zweiten Speicher eines insbesondere mit einem Kommunikationsnetz in Verbindung stehenden Kommunikationsendgerätes, in deren ersten Speicher sich bereits eine erste Datenmenge befindet.

Ein derartiges Verfahren ist beispielsweise aus der Beschreibung des Kommunikationsendgerätes Eurit 40 der Firma Ascom bekannt und unter der Internet-Adresse www.ascom.de/telefon/products/isdn/eurit40conentnt.html zugänglich. Dort ist ausgeführt, daß Telefonsoftware mittels einer in dem Telefongerät Eurit 40 integrierten Download-Funktion mittels einer Fernwartung einfach und schnell auf den aktuellen Stand gebracht werden kann.

Aus der Veröffentlichung der europäischen Patentanmeldung EP 0 804 046 A2 ist ein Verfahren bekannt, mit der die Software eines bewegbaren Kommunikationsendgerätes aktualisiert werden kann. Dazu ist vorgesehen, dass das Kommunikationsendgerät mit einem ersten Computerprogramm betrieben wird, welches in einem ersten Speicher hinterlegt ist. Ein zweites Computerprogramm wird an das Kommunikationsendgerät übersandt und das zweite Computerprogramm wird in einem zweiten Speicher gespeichert. Nachdem das zweite Computerprogramm in dem zweiten Speicher gespeichert wurde, wird das Kommunikationsendgerät mit dem zweiten Computerprogramm betrieben.

Weiterhin ist aus der Offenlegungsschrift DE 195 43 843 A1 bekannt, die Software eines mikrocomputergestützten Telefons zu aktualisieren. Ein Aktualisierungspaket wird dazu verwendet, die Software des Telefons zu aktualisieren. Dabei wird die Software zunächst zwecks Prüfung in einem Speicher des Telefons zwischengespeichert.
Bei einem solchen Aktualisierungsvorgang wirkt sich eine lange Dauer durch eine Blockierung des Kommunukationsenderätes und der Zuleitungen negativ aus.

Der vorliegenden Erfindung liegt daher die Aufgabe zugrunde, ein Verfahren der eingangs genannten Art zu schaffen, das eine möglichst schnelle Übertragung von Daten in den Speicher des Kommunikationsendgerätes ermöglicht.

Die Aufgabe wird bei einem Verfahren der eingangs genannten Art erfindungsgemäß dadurch gelöst, daß
- Informationen über die erste Datenmenge in einer mit dem Kommunikationsendgerät verbundenen Datenverarbeitungseinrichtung (Server) zugänglich sind,
- die in den zweiten Speicher des Kommunikationsendgerätes zu übertragenden Daten in Datensätze erster Art und Datensätze zweiter Art aufgeteilt werden, von denen die Datensätze erster Art
   identisch sind mit Teilen der ersten Datenmenge, die sich im Speicher des Kommunikationsendgerätes befindet und somit nicht von der Datenverarbeitungseinrichtung übertragen werden müssen und von denen die Datensätze zweiter Art keine Entsprechung in der ersten Datenmenge finden und
- die Datensätze zweiter Art von der Datenverarbeitungseinrichtung zu dem Kommunikationsendgerät übertragen werden.

Dabei werden unter dem Wort "Daten" im vorliegenden Zusammenhang beispielsweise ein Programm, Benutzer- oder Konfigurationsdaten sowie andere für die Funktion des Kommunikationsendgerätes notwendige Daten oder eine Kombination solcher Daten verstanden. Ein Kommunikationsnetz kann im Sinne der vorliegenden Anmeldung sowohl ein leitungsvermitteltes Netz (analog, ISDN, Funk) als auch ein paketvermitteltes Netz (LAN, WAN) sein. In der Datenverarbeitungseinrichtung (Server) liegen Informationen über die aktuell in dem Speicher des Kommunikationsendgerätes vorhandene erste Datenmenge vor. Dies kann beispielsweise dadurch realisiert sein, daß in dem Server eine Liste über Versionen von in entsprechenden Kommunikationsendgeräten gespeicherten ersten Datenmengen vorliegt oder daß die Information über die vorliegende Version zu Beginn des Verfahrens von dem Kommunikationsendgerät zum Server übertragen wird.

Die Daten, die in den zweiten Speicher des Kommunikationsendgerätes zu übertragen sind, können entweder in vorbereiteter Form, das heißt aufgeteilt nach Datensätzen erster und zweiter Art bereits in dem Server vorliegen oder beim Herstellen einer Verbindung zwischen dem Server und dem Kommunikationsendgerät aufgeteilt werden.

Dabei werden die Datensätze zweiter Art, die von dem Server aus zu dem Kommunikationsendgerät zu übertragen sind, mit Angaben zum Zielspeicher, der Zielspeicheranfangsadresse und der Anzahl der zu übertragenden Daten versehen. Es werden dadurch Datensatzpakete gebildet, die jeweils einen Datensatz zweiter Art und entsprechende Strukturdaten enthalten.

Eine vorteilhafte Ausgestaltung der Erfindung sieht vor, daß zusätzlich zu den Datensätzen zweiter Art von der Datenverarbeitungseinrichtung (Server) zu dem Kommunikationsendgerät Strukturdatenpakete übertragen werden, die Informationen über Quell- und Zielspeicheranfangsadressen zur Übertragung der Datensätze erster Art innerhalb des Kommunikationsendgerätes sowie über die Länge der jeweiligen Datensätze erster Art enthalten.

Zu den Datensätzen erster Art, die sich bereits innerhalb der ersten Datenmenge in dem Kommunikationsendgerät befinden und nicht von dem Server aus zu übertragen sind, wird jeweils vom Server aus ein Strukturdatenpaket übertragen, das nicht den Datensatz erster Art selbst enthält, der in den zweiten Speicher des Kommunikationsendgerätes zu übertragen ist, sondern lediglich Informationen über die Quellspeicheradressen im ersten Speicher des Kommunikationsendgerätes, von denen aus die Datensätze erster Art zu Zielspeicheradressen im zweiten Speicher des Kommunikationsendgerätes übertragen werden sollen. Die Strukturdatenpakete umfassen außer den Quell- und Zielspeicheranfangsadressen auch die Länge der innerhalb des Kommunikationsendgerätes zu übertragenden Datensätze erster Art.

Bei der Vorbereitung der von dem Server zu übertragenden Datensatzpakete und Strukturdatenpakete ist zu berücksichtigen, daß im Falle sich überlappender Quell- und Zielspeicher die in dem Kommunikationsendgerät vorhandene erste Datenmenge nicht überschrieben wird, damit die erste Datenmenge und darin enthaltene Programme intakt bleiben. Hierdurch wird sichergestellt, daß das Kommunikationsendgerät auch bei Fehlschlagen der Datenübertragung in jedem Fall betriebsbereit bleibt.

Datensatzpakete und Strukturdatenpakete, die von dem Server zum Kommunikationsendgerät übertragen werden, können durch Standardalgorithmen komprimiert und/oder kodiert bzw. verschlüsselt übertragen werden.

In dem Kommunikationsendgerät werden die von dem Server empfangenen Datensätze zweiter Art in dem durch die Zielspeicheranfangsadressen bezeichneten Speicherbereich abgelegt, wobei die Angaben über die Zielspeicheranfangsadressen den Strukturdaten der Datensatzpakete entnommen werden.

Außerdem werden in dem Kommunikationsendgerät aufgrund der Informationen der übertragenen Strukturdatenpakete gleichzeitig mit oder nach der Datenübertragung von dem Server die Datensätze erster Art von dem durch die Quellspeicheranfangsadressen bezeichneten Speicherbereich in den durch die Zielspeicheranfangsadressen bezeichneten Speicherbereich übertragen, das heißt kopiert.

In der Praxis zeigt sich, daß sich beim Ersetzen von Daten in einem Kommunikationsendgerät nur ein geringer Teil der dort bereits vorhandenen Datenmenge ändert. Der Großteil der vorhandenen Datenmenge kann weiterverwendet werden. Hierauf kann auch beim Erstellen eines Kommunikationsendgerätekonzepts hingewirkt werden, indem beispielsweise die Software eines solchen Kommunikationsendgerätes modularisiert aufgebaut wird und indem adressenunabhängige Datenstrukturen vorgesehen werden.

Die Übertragungsgeschwindigkeit von Daten innerhalb eines Kommunikationsnetzes ist in der Regel geringer als die Geschwindigkeit, mit der Daten innerhalb eines Kommunikationsendgerätes kopiert werden können, so daß eine Reduzierung der von dem Server zum Kommunikationsendgerät zu übertragenden Datensätze zu einer erheblichen Beschleunigung beim Übertragen der Daten in den zweiten Speicher des Kommunikationsendgerätes führt. Durch die beschriebene Aufteilung der Daten in Datensätze erster Art und zweiter Art wird erreicht, daß nur diejenigen Datensätze über das Kommunikationsnetz ins Kommunikationsendgerät übertragen werden, die in der im Speicher ursprünglich vorhandenen ersten Datenmenge nicht enthalten sind. Diese über das Kommunikationsnetz übertragenen Datensätze zweiter Art werden anschließend durch die bereits im Kommunikationsendgerät befindlichen Datensätze erster Art ergänzt, um eine zweite, aktualisierte Datenmenge im zweiten Speicher des Kommunikationsendgerätes zur Verfügung zu stellen.

Durch die Reduzierung der Dauer der Übertragung von Datensätzen über ein Kommunikationsnetz oder eine sonstige Verbindung wird die Belastung dieser Verbindung bzw. des Kommunikationsnetzes reduziert. Die Wahrscheinlichkeit von Störungen innerhalb dieser verkürzten Datenübertragungszeit ist somit ebenfalls reduziert.

Durch die Übertragung von Strukturdatenpaketen von der Datenverarbeitungseinrichtung (Server) zu dem Kommunikationsendgerät wird das Zusammensetzen der in den zweiten Speicher zu übertragenden Daten aus Datensätzen erster Art und Datensätzen zweiter Art erheblich vereinfacht. Von der Datenverarbeitungseinrichtung (Server) aus kann die Organisation und Anordnung der zu übertragenden Daten in dem zweiten Speicher des Kommunikationsendgerätes bereits vor der Übertragung festgelegt werden. Die Reihenfolge der Übertragung von Datensatzpaketen und Strukturdatenpaketen ist hiervon jedoch unabhängig.

Eine weitere vorteilhafte Ausgestaltung der Erfindung sieht vor, daß daß nach der Übertragung wenigstens eines Strukturdatenpaketes und unabhängig von der Übertragung weiterer Daten zwischen der Datenverarbeitungseinrichtung (Server) und dem Kommunikationsendgerät innerhalb des Kommunikationsendgerätes anhand des/der bereits übertragenen Strukturdatenpakete die entsprechenden Datensätze erster Art von ersten, durch die Quellspeicheranfangsadressen bezeichneten Bereichen des ersten Speichers in zweite, durch die Zielspeicheranfangsadressen bezeichnete Bereiche des zweiten Speichers kopiert werden.

Wenn ein Strukturdatenpaket übertragen worden ist, wird nachfolgend in dem Kommunikationsendgerät die Übertragung des entsprechend bezeichneten Datensatzes erster Art aus der ersten Datenmenge in den Zielspeicherbereich des zweiten Speichers vorgenommen. Dieser Vorgang kann innerhalb des Kommunikationsendgerätes unabhängig vom Empfang weiterer Daten gesteuert werden, so daß das Kopieren von Datensätzen innerhalb des Kommunikationsendgerätes und der Empfang weiterer Daten von der Datenverarbeitungseinrichtung gleichzeitig erfolgen kann.

Die Verbindung zwischen der Datenverarbeitungseinrichtung und dem Kommunikationsendgerätes kann abgebrochen werden, sobald alle Datensatzpakete und Strukturdatenpakete übertragen worden sind. Die Übertragung von Datensätzen erster Art innerhalb des Kommunikationsendgerätes vom Quellspeicherbereich in den Zielspeicherbereich kann über diesen Zeitpunkt hinaus andauern.

Im Folgenden wird die Erfindung anhand eines Ausführungsbeispiels in einer Zeichnung gezeigt und nachfolgend beschrieben:

Dabei zeigt
- Figur 1: schematisch eine Datenverarbeitungseinrichtung (Server) und ein über ein Kommunikationsnetz mit dieser verbundenes Kommunikationsendgerät,

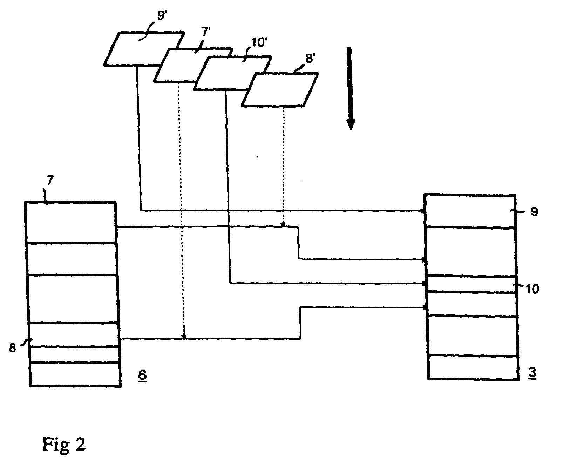

- Figur 2: schematisch den Vorgang der Übertragung und des Kopierens von Datensätzen.

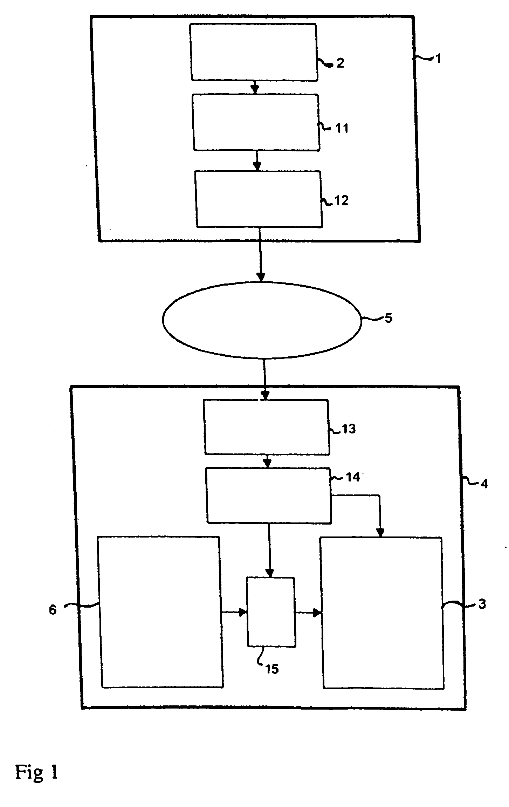

In der Figur 1 ist eine Datenverarbeitungseinrichtung 1 (Server) dargestellt, die in einer Speichereinrichtung 2 Daten enthält, die in einen zweiten Speicher 3 eines Kommunikationsendgerätes 4 zu übertragen sind. Das Kommunikationsendgerät 4 enthält in einem ersten Speicher 6 bereits eine erste Datenmenge.

Der Server 1 ist üblicherweise zentral bei einer Betreibergesellschaft untergebracht und mittels eines Kommunikationsnetzes 5 mit einem oder mehreren Kommunikationsendgeräten 4 verbunden oder wenigstens verbindbar. Das Kommunikationsnetz 5 kann beispielsweise als analoges leitungsgebundenes Netz, ISDN-Netz, Funk-Netz, LAN (Local Area Network), WAN (Wide A-rea Network) usw. ausgebildet sein.

In dem Server 1 liegen Informationen darüber vor, wie die erste Datenmenge innerhalb des ersten Speichers 6 des Kommunikationsendgerätes 4 beschaffen ist. Liegen solche Daten vor Beginn des Verfahrens im Server 1 noch nicht vor, so können sie zu Beginn über das Kommunikationsnetz 5 vom Kommunikationsendgerät 4 dem Server 1 mitgeteilt werden.

Darauf werden im Server 1 die in den zweiten Speicher 3 zu übertragenden Daten mit den im ersten Speicher 6 des Kommunikationsendgerätes 4 bereits vorhandenen Daten der ersten Datenmenge verglichen und in Datensätze erster Art 7,8 und Datensätze zweiter Art 9,10 aufgeteilt, von denen die Datensätze erster Art identisch sind mit Teilen der ersten Datenmenge im ersten Speicher 6 und die Datensätze zweiter Art keine Entsprechung in den Daten der ersten Datenmenge im ersten Speicher 6 des Kommunikationsendgerätes 4 finden.

Die Datensätze zweiter Art werden dem Kommunikationsendgerät 4 von dem Server 1 aus in Form von Datensatzpaketen 9',10' übermittelt und innerhalb des Kommunikationsendgerätes 4 direkt in den zweiten Speicher 3 geschrieben. Zu diesem Zweck weisen die Datensatzpakete 9',10' außer den Datensätzen zweiter Art 9,10 auch Informationen über den Adressenbereich, genauer die Zielspeicheranfangsadresse und die Datensatzlänge, im zweiten Speicher 3 auf, in den diese Datensätze hineingeschrieben werden sollen.

Zu jedem Datensatz erster Art 7,8 übersendet der Server 1 an das Kommunikationsendgerät 4 jeweils ein Strukturdatenpaket 7',8', das nicht die Daten des jeweiligen Datensatzes 7,8 enthält, sondern lediglich Informationen über die Quellspeicheranfangsadresse des bereits in dem ersten Speicher 6 vorliegenden Datensatzes 7,8 und die Zielspeicheranfangsadresse in dem zweiten Speicher 3, in den der jeweilige erste Datensatz 7,8 hineinkopiert werden soll, sowie über die Datensatzlänge.

Die Strukturdatenpakete 7',8' enthalten somit nur die notwendigen Informationen über Speicheranfangsadressen und Datensatzlängen und somit sehr viel weniger Information, als wenn der Dateninhalt der Datensätze erster Art 7,8 von dem Server aus übertragen werden müßte. Dadurch wird das Kommunikationsnetz 5 entlastet bzw. die Übertragungsdauer zwischen dem Server 1 und dem Kommunikationsendgerät 4 verkürzt.

Um die Datenübertragung weiter zu beschleunigen, werden die Datensätze 9,10 bzw. die entsprechenden Datensatzpakete 9',10'und Strukturdatenpakete 7',8' in einer Kodier- und Kompressionsvorrichtung 11 der Datenverarbeitungseinrichtung 1 verschlüsselt und komprimiert. Von einem Sender 12 aus werden dann die Pakte über das Kommunikationsnetz 5 zu dem Kommunikationsendgerät 4 übermittelt, das einen Empfänger 13 aufweist. Dieser Empfänger 13 leitet die Datensatzpakete und Strukturdatenpakete zu einer Dekodierungs- und Dekompressionseinheit 14 weiter. Von der Dekodierungs- und Dekompressionseinheit 14 aus werden die Datensätze zweiter Art direkt in den zweiten Speicher 3 eingeschrieben, während die Strukturdatenpakete 7',8' in einer Liste 15 innerhalb eines Speichers hinterlegt werden. Die Liste 15 enthält dann jeweils die Quellspeicheranfangsadresse (im ersten Speicher 6), Zielspeicheranfangsadresse (im zweiten Speicher 3) sowie die Anzahl der zu übertragenden Daten der innerhalb des Kommunikationsendgerätes 4 zu kopierenden Datensätze erster Art. Die Durchführung der Kopiervorgänge kann unabhängig vom Empfang weiterer Daten durch die Empfangseinrichtung 13 erfolgen.

Ziel der Datenübertragung ist es, in dem zweiten Speicher 3 eine vollständige zweite Datenmenge aus allen innerhalb des Kommunikationsendgerätes und von außen zu übertragenden Daten zu bilden, die beispielsweise ein funktionsfähiges Programm für das Kommunikationsendgerät 4 darstellt. Bis zur Fertigstellung dieser zweiten Datenmenge in dem zweiten Speicher 3 sollte jedoch die erste Datenmenge in dem ersten Speicher 6 unverändert bleiben, so daß das entsprechende ursprüngliche Programm lauffähig bleibt und auf dieses ursprüngliche Programm im Falle eines Fehlers bei der Datenübertragung jederzeit zurückgegriffen werden kann. Erst wenn die Daten in den zweiten Speicher 3 vollständig übertragen sind, kann die erste Datenmenge in dem ersten Speicher 6 gelöscht werden.

Der erste Speicher 6 und der zweite Speicher 3 können auch als unterschiedliche Speicherbereiche einer einzigen Speichereinrichtung oder eines einzigen physikalischen Speichers realisiert sein. Diese unterschiedlichen Speicherbereiche können einander auch überlappen.

Das Kommunikationsendgerät 4 kann beispielsweise eine Vermittlungseinrichtung für Kommunikationsgeräte oder ein sonstiges Gerät mit Kommunikationsmöglichkeiten sein.

## Patentansprüche

1. Verfahren zum Übertragen von Daten in einen zweiten Speicher (3) eines mit einem Kommunikationsnetz (5) in Verbindung stehenden Kommunikationsendgerätes (4), in dessen erstem Speicher (6)
- sich bereits eine erste Datenmenge befindet, wobei
- Informationen über die erste Datenmenge in einer mit dem Kommunikationsendgerät (4) verbundenen Datenverarbeitungseinrichtung (1) zugänglich sind, **dadurch** gekenzeichnet, daβ
- die in den zweiten Speicher (3) des Kommunikationsendgerätes (4) zu übertragenden Daten in Datensätze erster Art (7,8) und Datensätze zweiter Art (9,10) aufgeteilt werden, von denen die Datensätze erster Art (7,8) identisch sind mit Teilen der ersten Datenmenge, die sich im ersten Speicher (6) des Kommunikationsendgerätes (4) befindet und somit nicht von der Datenverarbeitungseinrichtung übertragen werden müssen und von denen die Datensätze zweiter Art keine Entsprechung in der ersten Datenmenge finden und
- die Datensätze (9,10) zweiter Art von der Datenverarbeitungseinrichtung (1) zu dem Kommunikationsendgerät (4) übertragen werden.

2. Verfahren nach Anspruch 1,
**dadurch gekennzeichnet,**
**daß** zusätzlich zu den Datensätzen zweiter Art von der Datenverarbeitungseinrichtung zu dem Kommunikationsendgerät (4) Strukturdatenpakete (7',8') übertragen werden, die Informationen über Quell- und Zielspeicheranfangsadressen zur Übertragung der Datensätze erster Art (7,8) innerhalb des Kommunikationsendgerätes (4) sowie über die Länge der jeweiligen Datensätze erster Art (7,8) enthalten.

3. Verfahren nach Anspruch 2,
**dadurch gekennzeichnet,**
**daß** nach der Übertragung wenigstens eines Strukturdatenpaketes (7',8') und unabhängig von der Übertragung weiterer Daten zwischen der Datenverarbeitungseinrichtung (1) und dem Kommunikationsendgerät (4) innerhalb des Kommunikationsendgerätes (4) anhand des/der bereits übertragenen Strukturdatenpakete (7',8') die entsprechenden Datensätze erster Art (7,8) von ersten, durch die Quellspeicheranfangsadressen bezeichneten Bereichen des ersten Speichers (6) in zweite durch die Zielspeicheranfangsadressen bezeichnete Bereiche des zweiten Speichers (3) kopiert werden.

## Claims

1. Method for transmitting data to a second memory (3) of a communications terminal (4) which is connected to a communications network (5) and the first memory (6) of which
- already contains a first quantity of data,
- information about the first quantity of data being available in a data processing device (1) which is connected to the communications terminal (4),
**characterized in that**
- the data which are to be transmitted to the second memory (3) of the communications terminal (4) are divided into data records of a first type (7, 8) and data records of a second type (9, 10), of which the data records of the first type (7, 8) are identical to parts of the first quantity of data in the first memory (6) of the communications terminal (4) and thus do not need to be transmitted by the data processing device, and of which the data records of the second type do not have a counterpart in the first quantity of data, and
- the data records (9, 10) of the second type are transmitted from the data processing device (1) to the communications terminal (4).

2. Method according to Claim 1,
**characterized in that**
structure data packets (7', 8') containing information about source and destination memory start addresses for transmitting the data records of the first type (7, 8) within the communications terminal (4) as well as about the length of the respective data records of the first type (7, 8) are transmitted, in addition to the data records of the second type, from the data processing device to the communications terminal (4) .

3. Method according to Claim 2,
**characterized in that**
the structure data packet (s) (7', 8') which has (have) already been transmitted is(are) used to copy, within the communications terminal (4), the relevant data records of the first type (7, 8) from first areas (which are denoted by the source memory start addresses) of the first memory (6) to second areas (which are denoted by the destination memory start addresses) of the second memory (3) after at least one structure data packet (7', 8') has been transmitted and irrespective of the transmission of further data between the data processing device (1) and the communications terminal (4)

## Revendications

1. Procédé de transmission de données dans une deuxième mémoire (3) d'un terminal de communication (4) qui est en liaison avec un réseau de communication (5) et dans la première mémoire (6) duquel
- se trouve déjà un premier ensemble de données,
- des informations sur le premier ensemble de données étant accessibles dans un dispositif de traitement de données (1) relié au terminal de communication (4),
**caractérisé par le fait que**
- on divise les données à transmettre dans la deuxième mémoire (3) du terminal de communication (4) en blocs de données d'un premier type (7, 8) et blocs de données d'un deuxième type (9, 10), les blocs de données du premier type (7, 8) étant identiques à des parties du premier ensemble de données qui se trouve dans la première mémoire (6) du terminal de communication (4) et ne devant donc pas être transmis par le dispositif de traitement de données et les blocs de données du deuxième type n'ayant pas de correspondance dans le premier ensemble de données, et
- on transmet les blocs de données (9, 10) du deuxième type du dispositif de traitement de données (1) au terminal de communication (4).

2. Procédé selon la revendication 1,
**caractérisé par le fait que**,
en plus des blocs de données du deuxième type, on transmet du dispositif de traitement de données au terminal de communication (4) des paquets de données de structure (7', 8') qui contiennent des informations sur des adresses de début de mémoires d'origine et de destination pour la transmission des blocs de données du premier type (7, 8) à l'intérieur du terminal de communication (4) et sur la longueur des blocs de données respectifs du premier type (7, 8).

3. Procédé selon la revendication 2,
**caractérisé par le fait que**,
après la transmission d'au moins un paquet de données de structure (7', 8') et indépendamment de la transmission d'autres données entre le dispositif de traitement de données (1) et le terminal de communication (4), on copie à l'intérieur du terminal de communication (4), à l'aide du ou des paquets de données de structure (7', 8') déjà transmis, les blocs de données correspondants du premier type (7, 8) à partir de premières zones, désignées par les adresses de début de mémoire d'origine, de la première mémoire (6) vers des deuxièmes zones, désignées par les adresses de début de mémoire de destination, de la deuxième mémoire (3).
